# DEMANDE DE BREVET EUROPEEN

(11) **EP 3 731 207 A1**
(43) Date de publication de la demande: **28.10.2020**
(21) Numéro de dépôt: 20171233.8
(22) Date de dépôt: 24.04.2020
(51) Int. Cl.: G08G 1/01, G08G 1/04, G08G 1/0967, G08G 1/16

(54) **PLATEFORME ET PROCÉDÉ DE SUPERVISION D'UNE INFRASTRUCTURE POUR VÉHICULES DE TRANSPORT, VÉHICULE, SYSTÈME DE TRANSPORT ET PROGRAMME D'ORDINATEUR ASSOCIÉS**

(30) Priorité: 26.04.2019 FR 1904475
(71) Demandeur: Transdev Group, 92130 Issy les Moulineaux (FR)
(72) Inventeur: NGUYEN, Kien Cuong, 92160 ANTONY (FR); BEAUVILLAIN, Alexis, 91300 MASSY (FR)
(74) Mandataire: Lavoix

(57) **Abrégé**

L'invention concerne une plateforme de supervision (14) d'une infrastructure pour véhicules (12_{A}) de transport, notamment autonomes, la plateforme (14) comprenant un outil de synthèse (28) comprenant au moins :
- un premier module de réception et de traitement (30) configuré pour recevoir et traiter au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure, et
- un deuxième module de réception et de traitement (32) configuré pour recevoir et traiter au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

## Description

La présente invention concerne une plateforme de supervision d'une infrastructure pour véhicules de transport, notamment autonomes.

L'invention concerne également un système de transport comprenant une flotte de véhicules propres à se déplacer sur une infrastructure pour véhicules de transport, la flotte de véhicules comprenant au moins un véhicule cible propre à suivre un trajet prédéfini sur l'infrastructure.

L'invention concerne également un procédé de supervision d'une infrastructure pour véhicules de transport, notamment autonomes, le procédé étant mis en oeuvre par une telle plateforme de supervision de l'infrastructure.

L'invention concerne également un programme d'ordinateur comportant des instructions logicielles qui, lorsqu'elles sont exécutées par un ordinateur, mettent en œuvre un tel procédé de supervision.

L'invention concerne le domaine de la supervision d'une flotte de véhicules de transport sur une infrastructure, notamment routière ou ferrée, et notamment le domaine de la conduite automatique de véhicules de transport autonomes.

En effet, dans le domaine du pilotage sécurisé des véhicules automobiles, et notamment dans le pilotage autonome, un des problèmes principaux est l'identification anticipée d'obstacles sur le trajet d'un véhicule en mouvement, permettant de prendre des mesures correctrices pour que le véhicule ne percute pas ces obstacles et/ou modifie son itinéraire afin de l'éviter.

Les obstacles considérés sont de tout type, par exemple des obstacles fixes, comme des rambardes de sécurité, des véhicules stationnés, ou des obstacles en mouvement, par exemple d'autres véhicules ou des piétons. On comprend qu'il est critique d'éviter toute collision entre un véhicule en mouvement et de tels obstacles.

On connait des véhicules équipés chacun d'au moins un module de détection d'obstacle(s) configuré pour détecter tout obstacle entrant dans son champ de vision. Cependant, une telle détection d'obstacle mise en oeuvre par le seul véhicule est limitée par le champ de vision du module de détection d'obstacle qu'il comprend.

On connaît des systèmes de perception collective d'assistance à la conduite automobile comprenant des dispositifs de communication aptes à identifier des obstacles dans une zone de circulation via des capteurs, installés en voirie et/ou embarqués à bord d'une pluralité de véhicules distincts, et aptes à en informer une plateforme de supervision à distance. La plateforme de supervision à distance est apte à déterminer et à transmettre une consigne à un véhicule circulant dans ladite zone de circulation routière en fonction des différentes informations reçues via un tel système de perception collective.

Toutefois, ces systèmes de perception collective informent la plateforme de supervision à distance le plus souvent via des informations propres à la technologie de chaque capteur les constituant ce qui rend complexe et ralentit le traitement mis en oeuvre par la plateforme de supervision qui reçoit des informations de types aussi variés que les types de capteurs mis en œuvre.

Autrement dit pour un opérateur humain, localisé au sein de la plateforme de supervision à distance d'une zone de trafic à superviser, le traitement de ces informations associées aux différentes sources d'informations (i.e. capteurs) est complexe. En effet, amené à traiter différemment chaque information en fonction du type de capteur à partir de laquelle chaque information est obtenue, le traitement mené par l'opérateur humain est fastidieux et surtout long pour arriver à prendre une décision en fonction de la situation de trafic rencontrée, et cette décision une fois établie n'est souvent plus pertinente et/ou applicable du fait que la situation de trafic a évolué durant le temps nécessaire à son obtention.

Le but de l'invention est de remédier aux inconvénients de l'état de la technique en proposant une plateforme de supervision à distance plus efficace, et plus rapide pour mieux anticiper toute obstruction, notamment temporaire, du champ de vision d'un module de détection d'obstacle embarqué à bord d'un véhicule cible, notamment autonome à assister lors de son trajet.

A cet effet, l'invention a pour objet une plateforme de supervision d'une infrastructure pour véhicules de transport, notamment autonomes, la plateforme comprenant un outil de synthèse comprenant au moins :
- un premier module de réception et de traitement configuré pour recevoir et traiter au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure, et
- un deuxième module de réception et de traitement configuré pour recevoir et traiter au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

Ainsi, la plateforme de supervision, de par sa structure munie d'un outil de synthèse selon l'invention, est propre à recevoir et à traiter automatiquement (i.e. sans intervention humaine) des informations générées à partir de sources différentes, à savoir une source (i.e. capteur) en voirie et une source (i.e. capteur) embarquée à bord d'un véhicule, mais déterminées à partir d'un même format, à savoir une liste de suivi, format particulièrement adapté à la supervision d'élément(s) de trafic statique(s) ou dynamique(s) propre(s) à constituer un obstacle sur un trajet prédéfini d'un véhicule autonome par exemple.

Avec une telle uniformité de format utilisé pour générer les informations reçues le traitement de supervision globale d'une infrastructure mis en œuvre par la plateforme de supervision est simplifié et accéléré car l'outil de synthèse est propre à recevoir et traiter automatiquement des informations obtenues à partir de listes de suivi générées à partir de sources (i.e. capteurs) différentes, à savoir une source en voirie et une source embarquée à bord d'un véhicule. Autrement dit, la réactivité de supervision de la plateforme de supervision à distance est accrue ce qui permet d'augmenter la pertinence et l'efficacité de la prise de décision d'un opérateur humain localisé au sein de la plateforme de supervision et capable grâce à l'invention de mieux appréhender la situation de trafic en cours. Ainsi, l'outil de synthèse selon la présente invention est un outil d'aide à la décision.

Suivant d'autres aspects avantageux de l'invention, la plateforme de supervision comprend une ou plusieurs des caractéristiques suivantes, prises isolément ou suivant toutes les combinaisons techniquement possibles :
- l'outil de synthèse comprend en outre un module d'affichage configuré pour afficher simultanément sur une image représentative d'au moins une partie de l'infrastructure :
   - au moins une perception voirie, représentative de l'état de l'élément de trafic associé à ladite au moins une information de surveillance par voirie, la perception voirie étant déterminée à partir de ladite au moins une information de surveillance par voirie, et
   - au moins une perception véhicule, représentative de l'état de l'élément de trafic associé à ladite au moins une information de surveillance par véhicule, la perception véhicule étant déterminée à partir de ladite au moins une information de surveillance par véhicule ;
- le module d'affichage est configuré pour fournir un affichage dynamique propre à s'actualiser en cas de variation supérieure à un seuil prédéterminé de la valeur de ladite au moins une information de surveillance par voirie reçue entre deux instants distincts ou de la valeur de ladite au moins une information de surveillance par véhicule reçue entre deux instants distincts ;
- l'outil de synthèse comprend en outre un module de synchronisation configuré pour synchroniser ladite au moins une information de surveillance par voirie et ladite au moins une information de surveillance par véhicule lorsqu'elles sont associées au même élément de trafic ;
- la liste de suivi associée à ladite au moins une information de surveillance par voirie et/ou la liste de suivi associée à ladite au moins une information de surveillance par véhicule comprend une pluralité d'éléments d'information choisis parmi le groupe consistant en :
   - le type de l'élément de trafic,
   - la position de l'élément de trafic ;
   - au moins une dimension de l'élément de trafic ;
   - une vitesse de l'élément de trafic ; et
   - un indice de confiance associé à l'élément de trafic ;
- ladite au moins une information de surveillance par voirie reçue correspond :
   - directement à au moins une partie de la liste de suivi par voirie à laquelle ladite au moins une information de surveillance par voirie reçue est associée, ou
   - à une consigne de limitation de mouvement pour chaque véhicule se trouvant dans une zone géographique dans laquelle est situé l'élément de trafic associé à ladite au moins une information de surveillance par voirie, la consigne de limitation de mouvement étant calculée en fonction d'au moins la liste de suivi par voirie à laquelle ladite au moins une information de surveillance par voirie reçue est associée,
   et/ou dans laquelle ladite au moins une information de surveillance par véhicule reçue correspond :
   - directement à au moins une partie de la liste de suivi par véhicule à laquelle ladite au moins une information de surveillance par véhicule reçue est associée, ou
   - à une consigne de limitation de mouvement pour chaque véhicule se trouvant dans une zone géographique dans laquelle est situé l'élément de trafic associé à ladite au moins une information de surveillance par véhicule, la consigne de limitation de mouvement étant calculée en fonction d'au moins la liste de suivi par véhicule à laquelle ladite au moins une information de surveillance par véhicule reçue est associée ;
- la plateforme comprend en outre un module de génération et de transmission d'une instruction à destination d'un véhicule cible propre à suivre un trajet prédéfini sur l'infrastructure, l'instruction étant déterminée à partir de ladite au moins une information de surveillance par voirie et à partir de ladite au moins une information de surveillance par véhicule.

L'invention a également pour objet un système de transport comprenant une flotte de véhicules propres à se déplacer sur une infrastructure pour véhicules de transport, la flotte de véhicules comprenant au moins un véhicule cible propre à suivre un trajet prédéfini sur l'infrastructure, le système de transport comprenant en outre une telle plateforme de supervision selon l'invention.

L'invention a également pour objet un procédé de supervision d'une infrastructure pour véhicules de transport, notamment autonomes, le procédé étant mis en œuvre par un outil de synthèse d'une plateforme de supervision de l'infrastructure, le procédé comprenant :
- une première étape de réception et de traitement d'au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure,
- une deuxième étape de réception et de traitement d'au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

L'invention a également pour objet un programme d'ordinateur comportant des instructions logicielles qui, lorsqu'elles sont exécutées par un ordinateur, mettent en œuvre un tel procédé de supervision.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
[Fig 1] la figure 1 est une représentation schématique d'un système de transport selon l'invention dans une situation de supervision;
[Fig 2] la figure 2 est un exemple d'image de synthèse produite par l'outil de synthèse de la plateforme de supervision selon l'invention, et
[Fig 3] la figure 3 est un organigramme d'un procédé de supervision selon l'invention.

Dans la suite de la description, l'expression « sensiblement égal(e) à » désigne une relation d'égalité à plus ou moins 10%, de préférence à plus ou moins 5%.

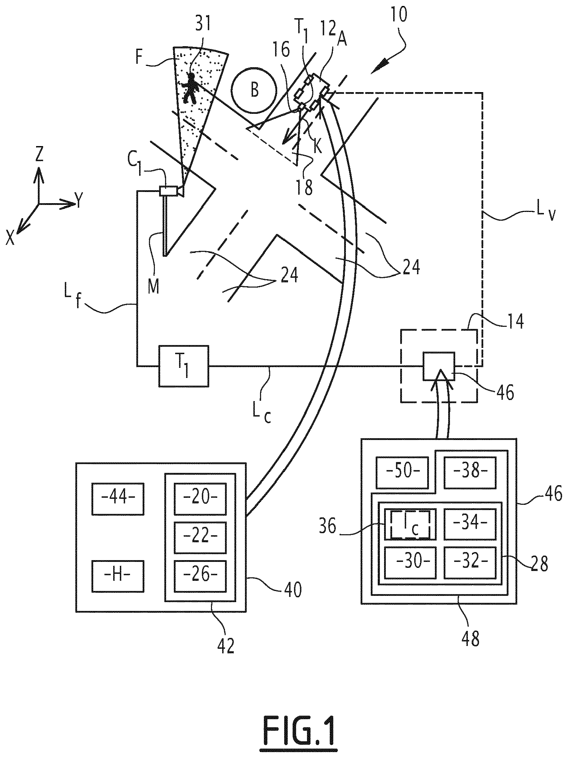

Sur la figure 1, un système de transport 10 comprend une flotte de véhicules 12, une plateforme de supervision 14 et une pluralité de capteurs, installés en voirie tel que le capteur C₁ et/ou embarqués à bord d'une pluralité de véhicules distincts tel que le module de détection d'obstacle (i.e. capteur) 16.

Chaque capteur (i.e. module de détection d'obstacle) C₁ ou 16 est associé à un dispositif électronique de communication (i.e. terminal) T₁ comprenant au moins un module d'émission configuré pour transmettre une information de surveillance par voirie ou par véhicule selon la localisation du capteur considéré.

Selon une première variante chaque capteur est associé à son propre terminal (i.e. dispositif électronique) de communication pour former ensemble un appareil de surveillance.

Selon une deuxième variante (non représentée), plusieurs capteurs sont associés à un même dispositif électronique de communication T₁.

Chaque appareil de surveillance installé en voirie est par exemple fixé à un mât vertical M, comme dans l'exemple de la figure 1, ou encore à un bâtiment B. Chaque appareil de surveillance installé à bord d'un véhicule automobile est de préférence fixé à l'avant du véhicule automobile 12_{A} ou bien sur le toit dudit véhicule 12_{A}.

Parmi la flotte de véhicules 12, au moins un véhicule 12 est un véhicule autonome et est alors noté 12_{A}. La flotte comporte de préférence une pluralité de véhicules 12, chaque véhicule étant de préférence un véhicule autonome 12_{A}.

Dans l'exemple de la figure 1, le véhicule autonome 12_{A} est une voiture autonome, un bus autonome, un tramway autonome, un train autonome, ou encore tout autre moyen de transport public autonome, etc.

Un tel véhicule autonome 12_{A} comprend de manière connue, des roues avant, des roues arrière, un moteur (non représenté) relié mécaniquement via une chaîne de transmission aux roues avant et/ou arrière pour l'entraînement desdites roues en rotation autour de leur axe, un système de direction (non représenté), adapté pour agir sur les roues avant et/ou arrière du véhicule autonome 12_{A} de manière à modifier l'orientation de sa trajectoire, et un système de freinage (non représenté), adapté pour exercer une force de freinage sur les roues du véhicule autonome 12_{A}.

L'homme du métier comprendra alors que le véhicule 12_{A} est représenté en vue de dessus sur la vue schématique de la figure 1, les rectangles noirs symbolisant les roues de ce véhicule autonome 12_{A}.

Selon l'invention, un tel véhicule autonome 12_{A} est muni d'au moins un module de détection d'obstacle 16 dont le champ de vision 18 est prédéterminé et connu de la plateforme de supervision 14.

Un tel module de détection d'obstacle 16 comprend par exemple un ou plusieurs capteurs embarqués au sein du véhicule correspondant à un capteur d'image(s), c'est-à-dire un capteur photo ou une caméra ou encore choisi parmi le groupe de capteurs comprenant au moins : un lidar (de l'anglais *light detection and ranging*)*,* un leddar (de l'anglais *light emitting diode detection and ranging*), un radar (de l'anglais *radio detection and ranging*) et un capteur à ultrasons.

De plus, tel qu'illustré sur la figure 1, le véhicule autonome 12_{A} comprend un module de géolocalisation 20, une horloge H, et un module de conduite autonome 22.

Par module de géolocalisation 20, on entend, par la suite, un instrument propre à positionner le véhicule autonome 12_{A} sur un plan ou une carte à l'aide de ses coordonnées géographiques. Un tel module de géolocalisation 20 est propre à être localisé, par exemple grâce à un système de positionnement par satellites, à recevoir son positionnement géographique en temps réel via, par exemple, un récepteur GPS et à le diffuser en temps réel.

D'autres techniques de géolocalisation sont utilisables selon l'invention, telles que la géolocalisation par géocodeur, par GSM, par Wi-Fi, par utilisation d'une centrale inertielle, d'un radar ou encore d'un lidar.

De telles techniques de géolocalisation sont selon un aspect particulier de l'invention optimisées par une technique de repérage sur carte (de l'anglais « *Map Matching* ») ou encore une technique de cartographie et de localisation simultanées (SLAM de l'anglais « *Simultaneous localization and mapping* »).

Selon un aspect particulier de l'invention, le module de géolocalisation 20 et l'horloge H sont conformes à un niveau d'effort de conception de sûreté de fonctionnement ASIL D (ASIL de l'anglais « *Automotive Safety Integrity Level* »), un tel niveau ASIL D représentant le degré maximal de rigueur requise pour assurer les exigences de sécurité associé à un niveau maximal de danger. L'ASIL étant par définition obtenu par multiplication d'un triplet de valeurs respectivement représentatives de trois critères de sûreté à savoir la sévérité, l'exposition et la contrôlabilité.

Autrement dit, lors de la conception du véhicule autonome 12_{A} selon la présente invention, le niveau maximal de précision en termes d'indication(s) temporelle(s), ou de données horodatées, délivrée(s) par l'horloge H et en termes de précision de géolocalisation géographique du véhicule autonome 12_{A} délivrée par le module de géolocalisation 20 est exigé.

Par la suite, on entend par module de conduite autonome 22, un automate adapté pour piloter le véhicule autonome de manière autonome en recevant des informations sur l'environnement du véhicule autonome 12_{A} par l'intermédiaire de capteurs, localisés à l'extérieur ou à l'intérieur du véhicule autonome, et en agissant sur le moteur (non représenté), le système de direction (non représenté) et le système de freinage (non représenté) de manière à modifier la vitesse et la trajectoire du véhicule autonome 12_{A} en réaction aux informations reçues et de manière à se conformer à une mission programmée dans l'automate.

En particulier, une telle mission correspond au suivi d'un trajet prédéfini, tel que par exemple le trajet suivi par une ligne de bus ou de tramway ou de tout autre moyen de transport public autonome sur une ou plusieurs voies de circulation 24, visibles sur la figure 1, et propre à se croiser en une intersection à proximité d'un bâtiment B propre à obstruer par exemple le champ de vision du capteur 16.

Lorsque le véhicule automobile 12 est un véhicule automobile autonome, il présente de préférence un niveau d'automatisation supérieur ou égal à 3 selon le barème de l'Organisation Internationale des Constructeurs Automobiles (OICA). Le niveau d'automatisation est alors égal à 3, c'est-à-dire une automatisation conditionnelle (de l'anglais *Conditional Automation*), ou égal à 4, c'est-à-dire une automatisation élevée (de l'anglais *High Automation*), ou encore égal à 5, c'est-à-dire une automatisation complète (de l'anglais *Full Automation*).

Selon le barème de l'OICA, le niveau 3 d'automatisation conditionnelle correspond à un niveau pour lequel le conducteur n'a pas besoin de surveiller en permanence la conduite dynamique, ni l'environnement de conduite, tout en devant toujours être en mesure de reprendre le contrôle du véhicule automobile autonome. Selon ce niveau 3, un système de gestion de la conduite autonome, embarqué à bord du véhicule automobile autonome 12A, effectue alors la conduite longitudinale et latérale dans un cas d'utilisation défini et est apte à reconnaître ses limites de performance pour demander alors au conducteur de reprendre la conduite dynamique avec une marge de temps suffisante.

Le niveau 4 d'automatisation élevée correspond à un niveau pour lequel le conducteur n'est pas requis dans un cas d'utilisation défini. Selon ce niveau 4, le système de gestion de la conduite autonome, embarquée à bord du véhicule automobile autonome 12A, exécute alors la conduite dynamique latérale et longitudinale dans toutes les situations de ce cas d'utilisation défini.

Le niveau 5 d'automatisation complète correspond enfin à un niveau pour lequel le système de gestion de la conduite autonome, embarqué à bord du véhicule automobile autonome, effectue la conduite dynamique latérale et longitudinale dans toutes les situations rencontrées par le véhicule automobile autonome, pendant tout son trajet. Aucun conducteur n'est alors requis.

Par ailleurs, le véhicule autonome 12_{A} comprend un module de réception et de traitement 26 configuré pour recevoir, via la liaison dédiée Lᵥ (optionnellement sécurisée) et traiter une consigne de conduite émise par la plateforme de supervision 14. Une telle consigne correspond notamment à un ordre, voire une valeur de décélération ou à un changement de trajectoire, et est par la suite transférée par le module de réception 26 au module de conduite autonome 22 pour traitement et/ou application.

La plateforme de supervision 14 est un équipement électronique apte à superviser à distance, voire à contrôler à distance, la flotte de véhicule(s) automobile(s) 12, la plateforme de supervision étant également appelé PCC (de l'acronyme Poste de Commande Central).

Selon l'invention, la plateforme de supervision 14 comprend un outil de synthèse 28 propre à délivrer un résultat de synthèse, pour au moins une partie de l'infrastructure supervisée par la plateforme de supervision 14, à partir de l'ensemble des informations reçues.

Pour ce faire, l'outil de synthèse 28 comprend à la fois un premier module 30 de réception et de traitement configuré pour recevoir et traiter au moins une information de surveillance par voirie, chaque information de surveillance par voirie étant déterminée à partir d'une liste de suivi (de l'anglais *tracking list*) par voirie comportant plusieurs éléments d'information associés à un élément de trafic 31 détecté via un capteur installé en voirie de l'infrastructure, et un deuxième module 32 de réception et de traitement configuré pour recevoir et traiter au moins une information de surveillance par véhicule, chaque information de surveillance par véhicule étant déterminée à partir d'une liste de suivi (de l'anglais *tracking list*) par véhicule comportant plusieurs éléments d'information associés à un élément de trafic détecté via un capteur installé à bord d'un véhicule circulant sur l'infrastructure.

Chaque liste de suivi comporte plusieurs éléments d'information. Chaque élément d'information est horodaté et par exemple choisi parmi le groupe consistant en :
- le type de l'élément de trafic 31, tel qu'un piéton mobile ou à l'arrêt comme illustré par la figure 1, un groupe de piétons, un obstacle fixe tel qu'une congestion de trafic, une zone de chantier ou de restriction de la circulation, un obstacle naturel, tel qu'un arbre, une branche, un animal, véhicule automobile, vélo, un phénomène météorologique, etc. ;
- la position de l'élément de trafic 31 ;
- au moins une dimension de l'élément de trafic 31 ;
- une vitesse de l'élément de trafic 31 ; et
- un indice de confiance associé à l'élément de trafic 31 ;
- la description du champ de vision du capteur source correspondant par exemple aux coordonnées de la zone (i.e. champ de vision) surveillée par un tel capteur ;
- la classification du capteur telle que voirie, embarquée à bord d'un véhicule ;
- un identifiant propre au capteur utilisé.

Chaque liste de suivi est de préférence conforme au format CPM (de l'anglais *Collective Perception Message*)*,* tel que décrit par exemple dans le document intitulé « L 1.2C: SPECIFICATION DU SYSTEME ET DE SES COMPOSANTS -FORMAT DES MESSAGES (Specification of the system and its components - Message Formats) », dans sa version V03 publiée le 12 décembre 2017.

En particulier, il est à noter que :
ladite au moins une information de surveillance par voirie reçue correspond :
   - directement à au moins une partie de la liste de suivi par voirie à laquelle ladite au moins une information de surveillance par voirie reçue est associée, ou
   - à une consigne de limitation de mouvement pour chaque véhicule se trouvant dans une zone géographique dans laquelle est situé l'élément de trafic associé à ladite au moins une information de surveillance par voirie, la consigne de limitation de mouvement étant calculée en fonction d'au moins la liste de suivi par voirie à laquelle ladite au moins une information de surveillance par voirie reçue est associée,
et/ou que ladite au moins une information de surveillance par véhicule reçue correspond :
   - directement à au moins une partie de la liste de suivi par véhicule à laquelle ladite au moins une information de surveillance par véhicule reçue est associée, ou
   - à une consigne de limitation de mouvement pour chaque véhicule se trouvant dans une zone géographique dans laquelle est situé l'élément de trafic associé à ladite au moins une information de surveillance par véhicule, la consigne de limitation de mouvement étant calculée en fonction d'au moins la liste de suivi par véhicule à laquelle ladite au moins une information de surveillance par véhicule reçue est associée.

Chaque élément de trafic 31 est un élément apte à circuler et/ou à traverser une voie de circulation 24 respective. Chaque élément de trafic 31 est en particulier un élément apte à se trouver dans la zone géographique associée à l'infrastructure pour véhicule supervisée par la plateforme 14. Chaque élément de trafic 31 est par exemple choisi parmi le groupe consistant en : un véhicule motorisé, tel qu'un véhicule automobile 12 ; un véhicule non-motorisé ; un piéton et un animal.

Chaque capteur, que ce soit un capteur en voirie C₁ ou un capteur 16 embarqué à bord d'un véhicule 12_{A} est en effet associé à un module de détermination (non représenté) d'une telle liste de suivi pour au moins un élément de trafic détecté via le capteur considéré, l'élément de trafic étant situé à l'intérieur d'une zone géographique couverte par le capteur correspondant.

Par exemple, sur la figure 1, l'élément de trafic 31 est un piéton circulant dans le champ de vision F du capteur C₁.

Le module de détermination est par exemple localisé au sein du terminal de communication T₁ et configuré pour déterminer la liste de suivi à partir de la ou des valeurs mesurées fournies, via une liaison, par exemple filaire, L_{f} par le capteur C₁ relativement à l'élément de trafic 31 détecté, ou encore fournies, via une liaison, par exemple sans fil (non représentée) par le capteur 16 embarqué à bord du véhicule 12_{A}. Cette détermination d'élément(s) d'information, du type décrit précédemment et à partir de valeur(s) mesurée(s) par le capteur C₁, ou par le capteur 16 est connue en soi. L'homme du métier comprendra en outre que chaque valeur mesurée s'entend de manière large au sens d'une mesure effectuée par le capteur C₁ relativement à l'élément de trafic 31, et dépend du type du capteur C₁.

Lorsque le capteur C₁ est un capteur d'image(s), la valeur mesurée fournie par le capteur C₁ est notamment une image d'une scène comprenant l'élément de trafic 31, ou autrement dit une image de la zone géographique à l'intérieur de laquelle se trouve l'élément de trafic 31.

Lorsque le capteur C₁ est un lidar, un leddar, un radar, ou encore un capteur à ultrasons, la valeur mesurée fournie par le capteur C₁ est notamment un ensemble de point(s) de mesure de la scène comprenant l'élément de trafic 31, ou autrement dit un ensemble de point(s) de mesure de la zone géographique à l'intérieur de laquelle se trouve l'élément de trafic 31. Comme connu en soi, cet ensemble de point(s) de mesure, également appelé nuage de point(s) de mesure, est obtenu par le capteur 31 via l'émission d'une pluralité de signaux de mesure suivant différentes directions d'émission, puis la réception de signaux résultant de la réflexion, par l'environnement, des signaux de mesure émis, les signaux de mesure émis étant typiquement des signaux lumineux, radio, ou encore ultrasoniques.

Comme indiqué précédemment, selon une première variante l'information de surveillance par voirie et/ou l'information de surveillance par véhicule correspond directement à au moins une partie de la liste de suivi par véhicule à laquelle ladite au moins une information de surveillance reçue est associée. Ainsi, la charge de la liaison de données avec l'équipement électronique distant est prise en compte, et le module d'émission transmet une quantité d'éléments d'informations adaptée.

Selon une deuxième variante, l'information de surveillance par voirie et/ou l'information de surveillance par véhicule correspond à une consigne de limitation de mouvement pour chaque véhicule se trouvant dans une zone géographique dans laquelle est situé l'élément de trafic associé à ladite au moins une information de surveillance. La quantité d'informations ainsi transmise à la plateforme de supervision est alors réduite par rapport à l'état de la technique où l'intégralité des éléments d'information contenue dans la ou les listes de suivi déterminées est transmise. Chaque consigne de limitation de mouvement présente en effet une taille de données, par exemple exprimée en bits ou en octets, inférieure à la taille de la ou des listes de suivi à partir de laquelle ou desquelles elle est calculée.

En effet, selon un aspect particulier le terminal de communication T₁ comprend optionnellement un module de calcul (non représenté) configuré pour calculer, en fonction d'au moins une liste de suivi déterminée par le module de détermination précédemment cité, une consigne de limitation de mouvement pour chaque véhicule se trouvant dans la zone géographique, et/ou le terminal de communication T₁ comprend optionnellement un module de commutation configuré pour commuter le module d'émission terminal de communication T₁ entre un premier mode d'émission suivant lequel le module d'émission transmet la ou les consignes de limitation calculées lorsque le module de calcul du terminal de communication T₁ est optionnellement présent, et un deuxième mode d'émission présentant un état de commutation principal d'émission dans lequel le module d'émission transmet l'intégralité des éléments d'informations d'un ensemble de listes de suivi à la plateforme de supervision 14 et optionnellement un état de commutation secondaire d'émission dans lequel le module d'émission du terminal de communication T₁ transmet seulement une partie des éléments d'informations de l'ensemble de listes de suivi à l'équipement électronique de supervision.

Par « partie » on entend que dans l'état de commutation secondaire optionnel du deuxième mode d'émission, le module d'émission est configuré pour transmettre pour chaque liste de suivi un nombre d'éléments d'informations inférieur ou égal à un seuil N d'éléments prédéterminé (i.e. par exemple dans ce cas la partie transmise correspond aux N premiers éléments de la liste de suivi), et/ou pour transmettre seulement une partie de chaque liste de suivi, la partie transmise de chaque liste de suivi comprenant un nombre d'éléments d'informations inférieur au nombre total d'éléments d'informations contenus dans ladite liste de suivi.

Selon un aspect particulier, un tel module de commutation optionnel est notamment configuré pour évaluer une charge de la liaison de données entre le module d'émission et l'équipement électronique de supervision, et pour commuter le module d'émission optionnellement vers le premier mode d'émission, ou optionnellement vers l'état secondaire du deuxième mode d'émission en cas de détection d'une charge de la liaison de données supérieure à un seuil prédéfini de charge.

Selon un aspect particulier, le module de détermination est configuré pour fusionner au moins deux listes de suivi en une liste globale de suivi, les listes de suivi fusionnées étant de préférence associées à des éléments de trafic du même type, par exemple pour un groupe de piétons circulant sensiblement à la même vitesse et se trouvant dans une zone géographique réduite.

Selon un autre aspect complémentaire facultatif, le terminal de communication T₁ comprend en plus du module de calcul optionnel précédemment mentionné un module d'acquisition (non représenté) configuré pour acquérir au moins une règle de calcul de consigne, de la part d'un appareil électronique, de préférence de la part de la plateforme de supervision 14 ; et dans ce cas le module de calcul est configuré pour calculer la consigne de limitation de mouvement en fonction en outre de l'au moins une règle de calcul acquise, la consigne de limitation de mouvement étant choisie parmi le groupe consistant en : une consigne de limitation de vitesse ; une consigne de limitation d'accélération ; et une consigne de limitation de vitesse et d'accélération.

Il est à noter que chaque liste de suivi est déterminée, par le module de détermination du terminal de communication T₁ associé à un capteur, relativement à un référentiel propre au capteur considéré.

Selon la présente invention, au niveau de l'outil de synthèse 28 de la plateforme 14, le premier module de réception et de traitement 30 et le deuxième module de réception et de traitement 32 de l'outil de synthèse 28 de la plateforme 14 sont respectivement configurés pour convertir les éléments d'information de chaque information de surveillance reçue, que ce soit par voirie ou par véhicule, dans un référentiel commun, tel que le référentiel terrestre ou encore le référentiel géocentrique afin de permettre à l'outil de synthèse 28 de délivrer une information de synthèse à partir d'éléments d'informations comparables.

Selon une première variante particulière de l'invention, le premier module de réception et de traitement 30 et le deuxième module de réception et de traitement 32 correspondent à un même module de réception et de traitement (i.e. sont confondus en un seul module).

Selon une deuxième variante particulière de l'invention, le premier module de réception et de traitement 30 et le deuxième module de réception et de traitement 32 sont des modules distincts propres à fonctionner en parallèle et à utiliser des liaisons de communication dédiées de nature différentes, par exemple des liaisons filaires L_{c} pour le premier module de réception et de traitement 30 propre à recevoir et traiter au moins une information de surveillance de voirie, et des liaisons sans fil Lᵥ (optionnellement sécurisée) pour le deuxième module de réception et de traitement 32.

En complément facultatif, l'outil de synthèse 28 comprend en outre un module d'affichage 34 configuré pour afficher simultanément sur une image représentative d'au moins une partie de l'infrastructure :
- au moins une perception voirie, représentative de l'état de l'élément de trafic associé à ladite au moins une information de surveillance par voirie, la perception voirie étant déterminée à partir de ladite au moins une information de surveillance par voirie, et
- au moins une perception véhicule, représentative de l'état de l'élément de trafic associé à ladite au moins une information de surveillance par véhicule, la perception véhicule étant déterminée à partir de ladite au moins une information de surveillance par véhicule.

Selon un aspect complémentaire optionnel, le module d'affichage 34 capable, selon l'invention, d'afficher simultanément sur une image représentative d'au moins une partie de l'infrastructure à la fois au moins une perception voirie et au moins une perception véhicule, est également propre à restituer uniquement une ou des perception(s) voirie(s) simultanément ou uniquement une ou des perception(s) véhicule(s) simultanément, le mode de restitution étant sélectionnable par l'opérateur humain localisé au sein de la plateforme de supervision 14.

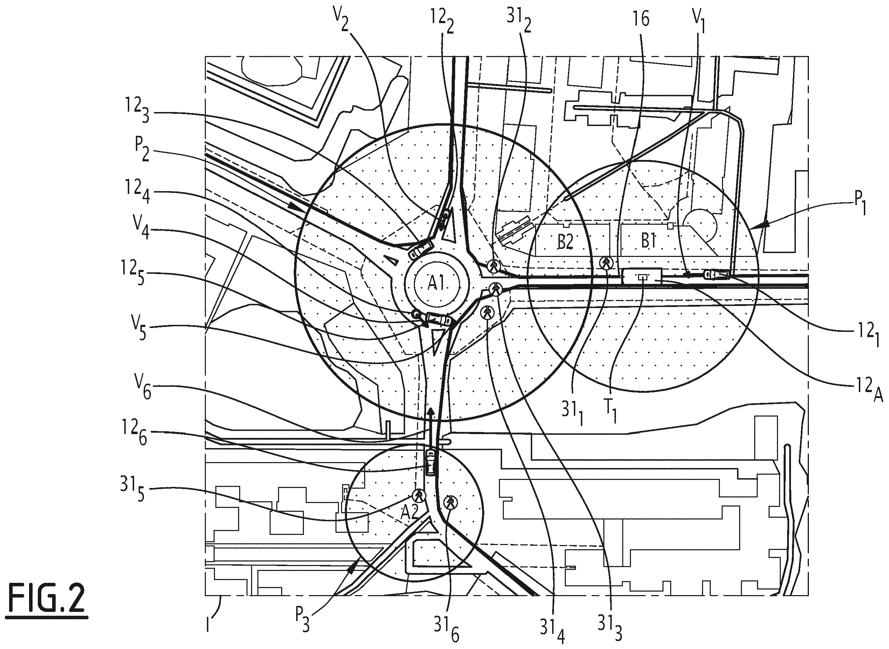

Une telle image est bidimensionnelle tel que représentée et décrite par la suite en relation avec la figure 2 ou tridimensionnelle.

En d'autres termes, un tel module d'affichage 34 est configuré pour construire une image de synthèse de la situation de trafic en cours. Pour ce faire, un tel module est propre, par exemple, à superposer, simultanément, sur l'image représentative d'au moins une partie de l'infrastructure, au moins un état de l'élément de trafic associé à ladite au moins une information de surveillance par voirie et un état de l'élément de trafic associé à ladite au moins une information de surveillance par véhicule.

Selon un aspect particulier, de tels états de l'élément de trafic associé à ladite au moins une information de surveillance par voirie et de l'élément de trafic associé à ladite au moins une information de surveillance par véhicule correspondent directement à l'information de surveillance qui leur est associée à savoir respectivement, selon cet aspect particulier, une consigne de limitation de mouvement pour chaque véhicule se trouvant dans une zone géographique dans laquelle est situé l'élément de trafic associé à ladite au moins une information de surveillance par voirie et une consigne de limitation de mouvement pour chaque véhicule se trouvant dans une zone géographique dans laquelle est situé l'élément de trafic associé à ladite au moins une information de surveillance par véhicule. Selon cet aspect particulier, la ou les consignes de limitation obtenues sont propres à être restituée par le module d'affichage 34 en superposition sur l'image bidimensionnelle de synthèse au moyen d'un indicateur de limitation de vitesse prédéterminé et connu de l'opérateur humain localisé au sein de la plateforme de supervision 14.

En complément facultatif, le module d'affichage 34 est associé à un module de restitution d'informations sonores (non représenté) propre à restituer une partie des perceptions voirie(s) et/ou véhicule(s) obtenue(s) sous forme sonore de sorte à alléger l'image de synthèse construite via le module d'affichage 34.

Selon une variante particulière, un tel module d'affichage 34 est également propre, à un instant courant, à superposer, sur l'image représentative d'au moins une partie de l'infrastructure, le champ de vision de chacun des capteurs ayant fourni à l'instant courant chaque information de surveillance par voirie ou par véhicule.

Selon une autre variante particulière complémentaire et/ou facultative, le module d'affichage 34 est configuré pour fournir un affichage dynamique propre à s'actualiser en cas de variation supérieure à un seuil prédéterminé de la valeur de ladite au moins une information de surveillance par voirie reçue entre deux instants distincts ou de la valeur de ladite au moins une information de surveillance par véhicule reçue entre deux instants distincts.

En particulier, un tel seuil prédéterminé de la valeur de ladite au moins une information de surveillance par voirie ou par véhicule est respectivement propre à croître proportionnellement à la durée, séparant les deux instants distincts de réception d'une information de surveillance par voirie portant sur le même élément de trafic, ou séparant les deux instants distincts de réception d'une information de surveillance par véhicule portant sur le même élément de trafic.

Selon un aspect complémentaire facultatif, l'outil de synthèse 28 de la plateforme comprend en outre un module 36 de synchronisation configuré pour synchroniser ladite au moins une information de surveillance par voirie et ladite au moins une information de surveillance par véhicule lorsqu'elles sont associées au même élément de trafic

En particulier, un tel module de synchronisation 36 comprend un instrument de comparaison I_{c} de l'horodatage des informations fournies respectivement par un appareil de surveillance en voirie ou par un appareil de surveillance embarqué à bord d'un véhicule.

Selon un autre aspect complémentaire facultatif, la plateforme comprend en outre un module 38 de génération et de transmission d'une instruction à destination d'un véhicule cible propre à suivre un trajet prédéfini sur l'infrastructure, l'instruction étant déterminée à partir de ladite au moins une information de surveillance par voirie et à partir de ladite au moins une information de surveillance par véhicule.

Par exemple, tel qu'indiqué précédemment, à partir de ladite au moins une information de surveillance par voirie et à partir de ladite au moins une information de surveillance par véhicule, une image de synthèse de l'état du trafic en temps réel sur au moins une partie de l'infrastructure de transport est obtenue par le module d'affichage 34, et l'instruction à destination d'un véhicule cible est générée en tenant compte d'une telle image de synthèse.

Selon un aspect particulier, une instruction est générée à partir d'un ordre saisi par un opérateur humain, via une interface de saisie de la plateforme de supervision 14, l'opérateur humain définissant un tel ordre en visualisant l'image de synthèse obtenue selon présente invention.

Selon une variante, une instruction est générée automatiquement à partir des informations reportées sur l'image de synthèse obtenue selon l'invention et de la position du véhicule cible.

Pour ce faire une ou plusieurs règles de génération automatique prédéterminées sont prises en compte par le module de génération et de transmission 38. Par exemple, une première règle de génération automatique est activée si un élément de trafic, correspondant à un piéton, est détecté (par voirie et/ou par véhicule) en une localisation prédéterminée, par exemple au milieu d'une voie de circulation et pendant une plage horaire prédéterminée pour produire une instruction de ralentissement à destination du ou des véhicules cibles se dirigeant selon une trajectoire prédéterminée vers ladite localisation prédéterminée et une alerte à destination de l'opérateur humain localisé au sein de la plateforme de supervision 14.

Une deuxième règle de génération automatique est activée si un élément de trafic, correspondant à un piéton, est détecté (par voirie et/ou par véhicule)avec un comportement anormal tel qu'un état d'ivresse propre à influer sa propre trajectoire de déplacement pendant une plage horaire prédéterminée, pour produire une instruction de ralentissement à destination du ou des véhicules cibles se dirigeant selon une trajectoire prédéterminée à proximité de la zone de présence de l'élément de trafic au comportement anormal et une alerte à destination de l'opérateur humain localisé au sein de la plateforme de supervision 14.

Par « à proximité », on entend une localisation séparée d'une distance inférieure ou égale à sensiblement 50m de la zone de présence de l'élément de trafic au comportement anormal.

Une troisième règle de génération automatique est activée si un élément de trafic, correspondant à un véhicule, est détecté (par voirie et/ou par véhicule) en excès de vitesse au sein de la zone d'infrastructure surveillée pour produire une instruction de ralentissement à destination du ou des véhicules cibles se dirigeant selon une trajectoire prédéterminée à proximité de la zone de présence de l'élément de trafic en excès de vitesse et une alerte à destination de l'opérateur humain localisé au sein de la plateforme de supervision 14.

Par « à proximité », on entend une localisation séparée d'une distance inférieure ou égale à sensiblement 50m de la zone de présence de l'élément de trafic en excès de vitesse.

Une quatrième règle de génération automatique est activée si un changement de vitesse brutal de la vitesse d'un élément de trafic est détecté pour produire une instruction de ralentissement à destination du ou des véhicules cibles se dirigeant selon une trajectoire prédéterminée à proximité de la zone de présence d'un tel élément de trafic dont la variation de vitesse est brutale.

Par « changement de vitesse brutal », « variation de vitesse brutale », on entend une variation de vitesse supérieure à un seuil de variation prédéterminé sur une période de variation prédéterminée.

Selon les connaissances de l'homme du métier en termes de trafic et de risques de circulation associés une pluralité d'autres règles prédéterminées sont propres à également être prises en compte par le module de génération et de transmission 38 pour générer automatiquement une instruction de guidage d'un véhicule cible à partir des informations reportées sur l'image de synthèse obtenue selon l'invention et de la position du véhicule cible.

Dans l'exemple de la figure 1, le véhicule cible 12_{A} comprend une unité de traitement d'informations 40 formée par exemple d'une mémoire 42 et d'un processeur 44 associé à la mémoire 42.

Dans l'exemple de la figure 1, le module de géolocalisation 20, le module de conduite autonome 22 et le module de réception et de traitement 26 sont réalisés chacun sous forme d'un logiciel, ou d'une brique logicielle, exécutable par le processeur 44.

La mémoire 42 du véhicule cible 12_{A} est alors apte à stocker un premier logiciel de géolocalisation pour permettre la géolocalisation du véhicule cible 12_{A}, un deuxième logiciel de conduite autonome adapté pour piloter le véhicule autonome de manière autonome en recevant des informations sur l'environnement du véhicule autonome 12_{A} par l'intermédiaire de capteurs, localisés à l'extérieur ou à l'intérieur du véhicule autonome, et en agissant sur le moteur (non représenté), le système de direction (non représenté) et le système de freinage (non représenté) de manière à modifier la vitesse et la trajectoire du véhicule autonome 12_{A} en réaction aux informations reçues et de manière à se conformer à une mission programmée dans l'automate, un troisième logiciel de réception et de traitement configuré pour recevoir et traiter une consigne de conduite émise par la plateforme de supervision 14.

Le processeur 44 est alors apte à exécuter chacun des logiciels parmi le premier logiciel de géolocalisation, le deuxième logiciel de conduite autonome, le troisième logiciel de réception et de traitement une consigne de conduite émise par la plateforme de supervision 14.

En variante non représentée, le module de géolocalisation 20, le module de conduite autonome 22, le module de réception et de traitement 26 sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit*)*.*

Lorsqu'une partie du véhicule autonome 12_{A} est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Dans l'exemple de la figure 1, le module de géolocalisation 20, le module de conduite autonome 22, le module de réception et de traitement 26 sont embarqués au sein de l'unique unité de traitement d'informations 40, c'est-à-dire au sein d'un même et unique calculateur électronique du véhicule autonome 12_{A}.

De manière similaire, dans l'exemple de la figure 1, la plateforme de supervision 14 comprend également une unité de traitement d'informations 46 formée par exemple d'une mémoire 48 et d'un processeur 50 associé à la mémoire 48.

Dans l'exemple de la figure 1, le module optionnel 38 de génération et de transmission d'une instruction à destination d'un véhicule cible ainsi que l'outil de synthèse 28 et ses modules à savoir le premier module de réception et de traitement 30, le deuxième module de réception et de traitement 32, le module optionnel d'affichage 34, le module optionnel de synchronisation 36, sont réalisés chacun sous forme d'un logiciel, ou d'une brique logicielle, exécutable par le processeur 50.

La mémoire 48 de la plateforme de supervision 14 est alors apte à stocker, un logiciel optionnel de génération et de transmission d'une instruction, l'instruction étant déterminée à partir de ladite au moins une information de surveillance par voirie et à partir de ladite au moins une information de surveillance par véhicule, et un logiciel de synthèse propre à traiter au moins une information de surveillance par voirie et au moins une information de surveillance par véhicule.

Le processeur 50 est alors apte à exécuter le logiciel optionnel de génération et de transmission d'une instruction, le logiciel de synthèse et les modules logiciels qu'il comprend.

En variante non représentée, le module optionnel 38 de génération et de transmission d'une instruction à destination d'un véhicule cible ainsi que l'outil de synthèse 28 et ses modules à savoir le premier module de réception et de traitement 30, le deuxième module de réception et de traitement 32, le module optionnel d'affichage 34, le module optionnel de synchronisation 36, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Specific integrated Circuit).*

Lorsqu'une partie de la plateforme de supervision 14 est réalisée sous forme d'un ou plusieurs logiciels, c'est-à-dire sous forme d'un programme d'ordinateur, cette partie est en outre apte à être enregistrée sur un support, non représenté, lisible par ordinateur. Le support lisible par ordinateur est par exemple, un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou encore une carte optique. Sur le support lisible est alors mémorisé un programme d'ordinateur comportant des instructions logicielles.

Dans l'exemple de la figure 1, le module optionnel 38 de génération et de transmission d'une instruction à destination d'un véhicule cible ainsi que l'outil de synthèse 28 et ses modules à savoir le premier module de réception et de traitement 30, le deuxième module de réception et de traitement 32, le module optionnel d'affichage 34, le module optionnel de synchronisation 36 sont intégrés au sein de l'unique unité de traitement d'informations 46, c'est-à-dire au sein d'un même et unique calculateur électronique du véhicule autonome 12_{A}.

La figure 2 est un exemple d'image bidimensionnelle de synthèse produite par le module d'affichage 34 de l'outil de synthèse 28 de la plateforme de supervision 14 selon l'invention.

Un telle image correspond notamment à un plan I d'une partie de l'infrastructure de transport dans laquelle un véhicule autonome 12_{A} est en cours de déplacement à un instant t.

Le véhicule autonome 12_{A} transmet automatiquement (i.e. sans intervention humaine) par exemple à la plateforme de supervision 14, via la liaison L_{V}, illustrée sur la figure 1 une requête de confirmation de son itinéraire prédéfini, ou de confirmation de sa vitesse.

Pour aider un opérateur humain localisé au sein de la plateforme de supervision 14 à répondre à cette requête, l'outil de synthèse 28 de la plateforme 14 récupère, via son deuxième module de réception et de traitement 32, au moins une information de surveillance par véhicule transmise par le terminal de communication T₁, embarqué à bord de ce véhicule 12_{A}, et associé au capteur 16, et, via son premier module de réception et de traitement 30, au moins une information de surveillance par voirie transmise respectivement par le terminal de communication T₁ associé au capteur C₁ (non représentés) de l'appareil de surveillance A₁, et au moins une information de surveillance par voirie transmise respectivement par le terminal de communication T₂ associé au capteur C₂ (non représentés) de l'appareil de surveillance A₂.

Comme indiqué précédemment, ces informations de surveillance sont respectivement obtenues à partir de listes de suivi déterminée, par le module de détermination du terminal de communication T₁ associé au capteur considéré, et ce relativement à un référentiel propre au capteur considéré.

Selon la présente invention, au niveau de l'outil de synthèse 28 de la plateforme 14, le premier module de réception et de traitement 30 et le deuxième module de réception et de traitement 32 de l'outil de synthèse 28 de la plateforme 14 sont respectivement configurés pour convertir les éléments d'information de chaque information de surveillance reçue, que ce soit par voirie ou par véhicule, dans un référentiel commun, tel que le référentiel terrestre.

Pour construire l'image de synthèse de la figure 2, de tels éléments, convertis dans un référentiel commun, sont ensuite automatiquement reportés par le module d'affichage 34 en superposition sur l'image de synthèse de la figure 2.

Plus précisément, le capteur 16 embarqué à bord du véhicule 12_{A}, à l'instant t ± Δt, Δt étant prédéterminé et le cas échéant configuré manuellement par un opérateur humain localisé au sein de la plateforme 14, a détecté plusieurs éléments de trafic à savoir le véhicule 12₁ caractérisé par un vecteur de déplacement V₁ dont la longueur est proportionnelle à sa vitesse, et le piéton 31₁.

Selon l'invention, les informations de surveillance par véhicule associées respectivement aux éléments de trafic correspondant au véhicule 12₁ et au piéton 31₁ sont donc reportées, après réception et traitement, sur l'image de synthèse de la figure 2.

La portée P₁ du capteur 16 est selon un aspect facultatif également représentée sur l'image de synthèse. A titre d'alternative (non représentée), le champ de vision réel du capteur 16 est représenté sous la forme d'un polygone délimité par une ligne brisée en fonction des obstructions à ce champ de vision, par exemple le bâtiment B1 ou le bâtiment B2.

Le capteur en voirie C₁ de l'appareil de surveillance A₁, par exemple un lidar placé au centre d'un rond-point et présentant un champ de vision de 360° et une portée P₂, à l'instant t ± Δt, Δt étant prédéterminé et le cas échéant configuré manuellement par un opérateur humain localisé au sein de la plateforme 14, a détecté plusieurs éléments de trafic à savoir les véhicules 12₂ à 12₅ correspondant à des véhicules quatre roues représentés chacun au moyen de rectangles, ou à des véhicules deux roues représentés chacun par un point, caractérisés par leur vecteur de déplacement respectif V₂ à V₅ dont la longueur est proportionnelle à leur vitesse respective, et les piétons 31₂ à 31₄. En particulier, le véhicule 12₃, ici une automobile, est caractérisé par un vecteur vitesse nul signifiant qu'il est à l'arrêt en plein rond-point ce qui constitue potentiellement un élément perturbateur du trafic.

De manière similaire, le capteur en voirie C₂ de l'appareil de surveillance A₂, par exemple un lidar placé à proximité de l'intersection entre deux voies de circulation et présentant un champ de vision de 360° et une portée P₃ à l'instant t ± Δt, a simultanément détecté plusieurs éléments de trafic à savoir le véhicule 12₆ correspondant à un véhicule quatre roues représentés au moyen d'un rectangle et caractérisé par un vecteur de déplacement V₆ dont la longueur est proportionnelle à sa vitesse, et les piétons 31₅ et 31₆.

Avantageusement, l'ensemble de ces éléments de trafic détectés par un capteur C₁ en voirie comme par un capteur 16 embarqué à bord d'un véhicule sont tous uniformément reportés sur l'image de synthèse de la figure 2, ce qui permet à un opérateur humain visualisant une telle image au sein de la plateforme de supervision 14 d'appréhender rapidement la situation de trafic en cours pour déterminer quasiment instantanément les instructions de guidage à transmettre au véhicule autonome 12_{A}.

En particulier, le véhicule 12₆ présente une vitesse excessive supérieure à la limitation de vitesse autorisée.

Un tel excès de vitesse est selon une première variante de réalisation directement propre à être déterminée par le terminal T₂, associé au capteur C₂, ou selon une deuxième variante propre à être déterminée par le premier module de réception et de traitement 30 de la plateforme de supervision 14, ou selon une troisième variante propre à être déterminée par le module d'affichage 34, en comparant respectivement la valeur de vitesse mesurée, ou la valeur de vitesse traitée ou la longueur du vecteur vitesse à une valeur représentative de la limitation de vitesse s'appliquant dans la zone de circulation d

Selon un aspect particulier, le module d'affichage 34 est propre à restituer un tel excès de vitesse du véhicule 12₆ ou encore à restituer l'arrêt du véhicule 12₃, respectivement en affichant un message d'excès de vitesse/arrêt en superposition sur l'image de synthèse à proximité du véhicule 12₆/12₃ ou en ajoutant un indicateur d'excès de vitesse/d'arrêt en superposition sur l'image de synthèse, ou encore en rendant clignotant le vecteur vitesse de ce véhicule ou le véhicule lui-même.

L'ensemble formé du véhicule 12₆, de son vecteur de déplacement et optionnellement du message/indicateur/animation représentative de l'excès de vitesse de ce véhicule constitue une « perception voirie » selon la présente invention. De manière similaire, une « perception véhicule » est également formée par, par exemple le véhicule 12₁ et son vecteur de déplacement tel qu'obtenu à partir de l'élément de trafic correspondant détecté par le capteur 16 embarqué à bord du véhicule autonome 12_{A}.

En présence de l'ensemble de ces éléments de trafic obtenus à la fois à partir de capteur(s) en voirie et de capteur(s) embarqué(s) reportés sur le plan bidimensionnel pour former une image de synthèse de la situation de trafic en cours restituée au sein de la plateforme supervision 14, un opérateur humain est assisté en temps quasi-réel dans sa prise de décision pour répondre à la requête du véhicule autonome 12_{A}.

Par exemple, au vu du véhicule 12₃ à l'arrêt en plein rond-point et du véhicule 12₆ en excès de vitesse sur l'image de synthèse délivrée par l'outil de synthèse de la plateforme de supervision 14 selon l'invention, l'opérateur détermine un risque potentiel de collision ou à tout le moins qu'il est nécessaire de faire ralentir le véhicule autonome 12_{A} voire de modifier son itinéraire et saisi un ordre de circulation correspondant via des moyens d'interface au sein de la plateforme 14. Un tel ordre est ensuite converti et transmis à destination du véhicule autonome 12_{A} via le module de génération et de transmission 38 de la plateforme de supervision 14 selon la présente invention.

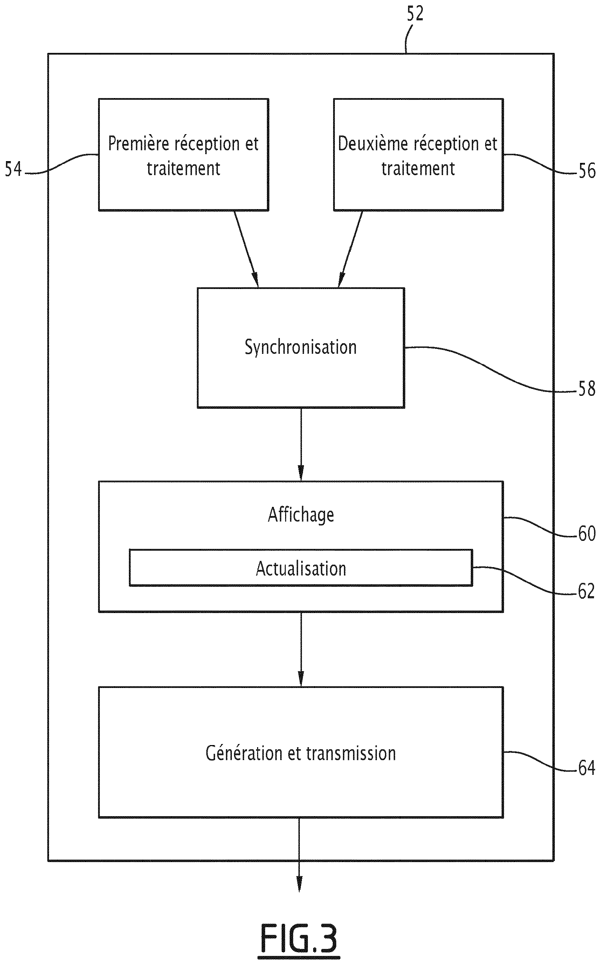

Le fonctionnement de la plateforme de supervision 14 selon l'invention va désormais être expliqué à l'aide de la figure 3 représentant un organigramme du procédé 52, selon l'invention, le procédé étant mis en œuvre par la plateforme de supervision 14.

Lors d'une étape 54, l'outil de synthèse 28 de la plateforme de supervision 14 selon l'invention met en œuvre, via son premier module de réception et de traitement 30, la réception et de traitement d'au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure.

En parallèle ou indépendamment, lors d'une étape 56, l'outil de synthèse 28 de la plateforme de supervision 14 selon l'invention met en œuvre, via son deuxième module de réception et de traitement 32, la réception et de traitement d'au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

Lorsqu'en complément facultatif, l'outil de synthèse 28 de la plateforme 14 comprend en outre le module de synchronisation 36, la plateforme 14 synchronise alors, lors de l'étape 58, via ce module de synchronisation 36, ladite au moins une information de surveillance par voirie et ladite au moins une information de surveillance par véhicule lorsqu'elles sont associées au même élément de trafic.

Lorsqu'en complément facultatif, l'outil de synthèse 28 de la plateforme 14 comprend en outre le module d'affichage 34, la plateforme 14 affiche alors, selon l'étape 60, simultanément sur une image représentative d'au moins une partie de l'infrastructure :
- au moins une perception voirie, représentative de l'état de l'élément de trafic associé à ladite au moins une information de surveillance par voirie, la perception voirie étant déterminée à partir de ladite au moins une information de surveillance par voirie, et
- au moins une perception véhicule, représentative de l'état de l'élément de trafic associé à ladite au moins une information de surveillance par véhicule, la perception véhicule étant déterminée à partir de ladite au moins une information de surveillance par véhicule.

Optionnellement, l'étape d'affichage 60 comprend une sous-étape 62 d'actualisation de l'affichage en cours tel que l'image de synthèse précédemment décrite, en cas de variation supérieure à un seuil prédéterminé de la valeur de ladite au moins une information de surveillance par voirie reçue entre deux instants distincts ou de la valeur de ladite au moins une information de surveillance par véhicule reçue entre deux instants distincts.

Enfin, lorsqu'en complément facultatif, la plateforme 14 comprend en outre le module de génération et de transmission 38, lors d'une étape 64, la plateforme 14 génère et transmet, via le module de génération et de transmission 38 une instruction à destination d'un véhicule cible propre à suivre un trajet prédéfini sur l'infrastructure, l'instruction étant déterminée à partir de ladite au moins une information de surveillance par voirie et à partir de ladite au moins une information de surveillance par véhicule.

On conçoit ainsi que la plateforme de supervision 14, propre à traiter à la fois des informations de surveillance par voirie et des informations de surveillance par véhicule simultanément, est propre, via son outil de synthèse 28 à restituer quasiment en temps réel et avec précision la situation de trafic en cours, ce qui permet à un opérateur humain d'anticiper plus efficacement et avec une réactivité accrue des difficultés de trafic potentielles afin de prendre des décisions de guidage de véhicule pertinentes et/ou de rendre un module de génération automatique d'instruction(s) de guidage intégré à l'outil de synthèse 28 plus fiable et plus efficace.

## Revendications

1. Plateforme de supervision (14) d'une infrastructure pour véhicules (12, 12_{A}) de transport, notamment autonomes, **caractérisé en ce que** la plateforme (14) comprend un outil de synthèse (28) comprenant au moins :
- un premier module de réception et de traitement (30) configuré pour recevoir et traiter au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure, et
- un deuxième module de réception et de traitement (32) configuré pour recevoir et traiter au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

2. Plateforme (14) selon la revendication 1, dans laquelle l'outil de synthèse (28) comprend en outre un module d'affichage (34) configuré pour afficher simultanément sur une image représentative d'au moins une partie de l'infrastructure :
- au moins une perception voirie, représentative de l'état de l'élément de trafic associé à ladite au moins une information de surveillance par voirie, la perception voirie étant déterminée à partir de ladite au moins une information de surveillance par voirie, et
- au moins une perception véhicule, représentative de l'état de l'élément de trafic associé à ladite au moins une information de surveillance par véhicule, la perception véhicule étant déterminée à partir de ladite au moins une information de surveillance par véhicule.

3. Plateforme (14) selon la revendication 2, dans laquelle le module d'affichage (34) est configuré pour fournir un affichage dynamique propre à s'actualiser en cas de variation supérieure à un seuil prédéterminé de la valeur de ladite au moins une information de surveillance par voirie reçue entre deux instants distincts ou de la valeur de ladite au moins une information de surveillance par véhicule reçue entre deux instants distincts.

4. Plateforme (14) selon l'une quelconque des revendications précédentes, dans laquelle, l'outil de synthèse (28) comprend en outre un module de synchronisation (36) configuré pour synchroniser ladite au moins une information de surveillance par voirie et ladite au moins une information de surveillance par véhicule lorsqu'elles sont associées au même élément de trafic.

5. Plateforme (14) selon l'une quelconque des revendications précédentes, dans laquelle la liste de suivi associée à ladite au moins une information de surveillance par voirie et/ou la liste de suivi associée à ladite au moins une information de surveillance par véhicule comprend une pluralité d'éléments d'information choisis parmi le groupe consistant en :
- le type de l'élément de trafic,
- la position de l'élément de trafic ;
- au moins une dimension de l'élément de trafic ;
- une vitesse de l'élément de trafic ; et
- un indice de confiance associé à l'élément de trafic.

6. Plateforme (14) selon l'une quelconque des revendications précédentes, dans laquelle ladite au moins une information de surveillance par voirie reçue correspond :
- directement à au moins une partie de la liste de suivi par voirie à laquelle ladite au moins une information de surveillance par voirie reçue est associée, ou
- à une consigne de limitation de mouvement pour chaque véhicule se trouvant dans une zone géographique dans laquelle est situé l'élément de trafic associé à ladite au moins une information de surveillance par voirie, la consigne de limitation de mouvement étant calculée en fonction d'au moins la liste de suivi par voirie à laquelle ladite au moins une information de surveillance par voirie reçue est associée,
et/ou dans laquelle ladite au moins une information de surveillance par véhicule reçue correspond :
- directement à au moins une partie de la liste de suivi par véhicule à laquelle ladite au moins une information de surveillance par véhicule reçue est associée, ou
- à une consigne de limitation de mouvement pour chaque véhicule se trouvant dans une zone géographique dans laquelle est situé l'élément de trafic associé à ladite au moins une information de surveillance par véhicule, la consigne de limitation de mouvement étant calculée en fonction d'au moins la liste de suivi par véhicule à laquelle ladite au moins une information de surveillance par véhicule reçue est associée.

7. Plateforme (14) selon l'une quelconque des revendications précédentes, la plateforme comprenant en outre un module de génération et de transmission (38) d'une instruction à destination d'un véhicule cible propre à suivre un trajet prédéfini sur l'infrastructure, l'instruction étant déterminée à partir de ladite au moins une information de surveillance par voirie et à partir de ladite au moins une information de surveillance par véhicule.

8. Système de transport comprenant une flotte de véhicules (12, 12_{A}), notamment autonomes (12_{A}), propres à se déplacer sur une infrastructure pour véhicules de transport, la flotte de véhicules comprenant au moins un véhicule cible (12_{A}) propre à suivre un trajet prédéfini sur l'infrastructure, **caractérisé en ce que** le système de transport comprend en outre une plateforme de supervision (14) selon l'une quelconque des revendications 1 à 7.

9. Procédé (52) de supervision d'une infrastructure pour véhicules (12, 12_{A}) de transport, notamment autonomes, le procédé étant mis en œuvre par un outil de synthèse (28) d'une plateforme de supervision (14) de l'infrastructure, le procédé comprenant :
- une première étape de réception et de traitement (54) d'au moins une information de surveillance par voirie, chaque information de surveillance par voirie étant déterminée à partir d'une liste de suivi par voirie comportant plusieurs éléments d'information associés à un élément de trafic détecté via un capteur installé en voirie de l'infrastructure,
- une deuxième étape de réception et de traitement (56) d'au moins une information de surveillance par véhicule, chaque information de surveillance par véhicule étant déterminée à partir d'une liste de suivi par véhicule comportant plusieurs éléments d'information associés à un élément de trafic détecté via un capteur installé à bord d'un véhicule circulant sur l'infrastructure.

10. Produit programme d'ordinateur comportant des instructions logicielles qui, lorsqu'elles sont exécutées par un ordinateur, mettent en œuvre un procédé de supervision selon la revendication 9.
